## Europäisches Patentamt

## European Patent Office

## Office européen des brevets

(11) Publication number: **0 010 605**
**B1**

(12) **EUROPEAN PATENT SPECIFICATION**

(45) Date of publication of patent specification: **12.01.83**

(21) Application number: **79103510.8**

(22) Date of filing: **19.09.79**

(51) Int. Cl.³: **G 11 B 5/016, G 11 B 17/02**

(54) **Magnetic disk drive apparatus.**

(30) Priority: **12.10.78 US 950756**

(43) Date of publication of application:
**14.05.80 Bulletin 80/10**

(45) Publication of the grant of the patent:
**12.01.83 Bulletin 83/2**

(84) Designated Contracting States:
**BE CH DE FR GB IT NL SE**

(56) References cited:
**DE - A - 2 709 261**
**US - A - 3 815 150**
**US - A - 3 890 643**
**US - A - 4 089 029**

**IBM TECHNICAL DISCLOSURE BULLETIN, Vol.
20, No. 6, November 1977
New York
W. E. BEUCH et al. "spider collet for flexible
magnetic disks" pages 2376 to 2377**

(73) Proprietor: **International Business Machines
Corporation
Armonk, N.Y. 10504 (US)**

(72) Inventor: **Carlson, John Arthur
1672 Sixth Avenue N.W.
Rochester, MN 55901 (US)**
Inventor: **Rusch, Kenneth David
2230 48th Street N.E.
Rochester, MN 55901 (US)**
Inventor: **Sippel, David Lester
3126 Crescent Lane N.W.
Rochester, MN 55901 (US)**

(74) Representative: **Petersen, Richard Courtenay
IBM United Kingdom Patent Operations Hursley
Park
Winchester Hants. SO21 2JN (GB)**

(56) References cited:
**O. Richter, R. v. Voss, Bauelemente der
Feinmechanik,
Berlin 1964,
P. 369**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

## Magnetic disk drive apparatus

The invention relates to magnetic disk drive apparatus and more particularly to apparatus including a rotatable drive hub and a collet movable towards the hub to grip a disk about a central hole between the collet and hub, the collet being carried by a leaf spring through which force is applicable to move the collet towards the hub to engage a disk between the collet and hub.

Many such magnetic disk drive apparatuses at present in use include a collet which, in effect, is mounted on a swingable lever pivoted at one end so that the collet is swung in an arc towards engagement with the rotatable hub. The level on which the collet is mounted may be a pivoted cover or door for closing the disk file apparatus in addition to engaging .the collet with the drive hub. Such a machine is disclosed in US Patent Specification No. 4,089,029 (Castrodale et al).

The present invention seeks to provide a magnetic disk drive apparatus which is so constructed that the collet is moved toward a rotatable drive hub with the longitudinal centres of the hub and collet being very nearly coincident for the complete movement of the collet and being accurately coincident for the last increment of movement of the collet towards engagement with the hub. In this way the disk engaging faces of the hub and collet grip the disk therebetween with uniform force for the complete circumference of the collet and hub so that the collet does not provide any side force or motion on the disk during a clamping of the disc by the collet with respect to the drive hub.

The invention also seeks to provide apparatus which requires less space than a swinging door or the like for mounting a collet so that the machine as a whole may be of less thickness in the directions of the longitudinal centres of the collet and hub.

In IBM Technical Disclosure Bulletin Volume 20, No. 6 November 1977, pages 2376 and 2377, it is proposed to use a cantilevered load spring for a collet. The collet is rotatably supported on a stud which extends through an oversized slot in the spring. The stud is held in position on the load spring by a compression spring. The load spring is movable towards the disk and hub by a pivoted and translatable support. Thus, although the collet is capable of lateral movement during engagement with the central hole in the disk and the hub to compensate for any pivotal movement of the spring, the arrangement is complicated by the need for two springs, with consequential space requirements.

On page 369 of Bauelemente der Feinmechanik by O Richter and R v Voss, Berlin 1964, there is shown a small elongated leaf spring whose ends are bent over and secured so that an element rigidly connected to the centre of the spring can move in a straight line. This necessitates the application of force at the centre of the spring so that the bowing of the spring is equal and thus would increase the thickness of the machine in the direction of the longitudinal centres of the collet and hub.

The invention seeks to provide magnetic disk drive apparatus in which force is applicable at other than the centre of the leaf spring in order to decrease the thickness of the machine, and unequal bowing of the leaf spring is avoided in order to maintain the collet in a centred position.

The apparatus according to the invention comprising a rotatable drive hub and a collet movable towards the hub to grip a disk about a central hole between the collet and the hub, the collet being carried by a leaf spring through which force is applicable to move the collet towards the hub to engage a disk between the collet and hub, is characterised in that the leaf spring carries the collet between its ends and has a pivotal mounting at one end and a sliding connection mounting at the other end, force applying means includes a. member rotatable about an axis normal to the axis of rotation of the hub and having an eccentrically located part for engagement with the spring between the collet and the pivotal mounting, and the spring has a depressed portion in which the eccentric part rests when the collet is in an initial disengaged position and has a projection adjacent the depressed portion, over which projection the eccentric part travels during rotation of the rotatable member to move the collet towards the hub and to act as a detent with respect to the spring in the collet engaged position.

An embodiment of apparatus according to the invention includes a leaf spring which carries the collet at an intermediate place thereon and which bears on the frame of the disk drive machine at the ends of the leaf spring and which is bowed in the direction away from the rotatable drive hub. The leaf spring is pivotally mounted with respect to the machine frame at one end of the spring and slidably bears on the frame at its other end. The spring includes a relatively wide leg portion, which is thus relatively stiff, between the pivotal mounting of the spring on the frame and the place of collet mounting and includes a relatively narrow and less stiff leg portion extending from the collet mounting to the other end of the leaf spring. A force applying selectively rotatable element is provided for applying a force to the leaf spring between its pivotal mounting and the collet mounting so as to reduce this bowing of the spring against its resiliency and to move the collet towards the hub to grip a magnetic disk between the collet and hub. The relatively narrow leg portion bends the relatively wide leg portion between the collet mounting and the place at which the rotatable element applies a collet closing force so that, even through the spring pivots about its pivotal connection with the frame at one end of the spring, the collet has its longitudinal centre remaining nearly in aglinment with the longitudinal centre of the hub for movement of the collet to its disk clamping position with respect to the hub.

The scope of the invention is defined by the appended claims; and how it can be carried into effect is hereinafter particularly described with reference to the accompanying drawings, in which:—

Fig. 1 is a fragmentary isometric view of magnetic disk drive apparatus according to the invention;

Fig. 2 is a fragmentary elevational view of part of the end of the apparatus of Fig. 1;

Fig. 3 is an end elevational view of the leaf spring together with a collet and a machine hub, with the collet being in unloaded position;

Fig. 4 is an end elevational view similar to that of Fig. 3, but with the collet in loaded position; and

Fig. 5 is a plan view of a magnetic disk assembly used in the disk drive apparatus.

The magnetic disk drive machine described below is for use with a magnetic diskette 330 (Fig. 5) comprising a thin flexible magnetic disk 332 which is rotatably disposed in a square sleeve jacket 334 of material that is somewhat thicker and more rigid than that of the disk 332. The jacket 334 has closed side edges so that the disk cannot slide out of the jacket and has aligned central round holes 336 and aligned radially extending slots 338 in its two thicknesses. The disk 332 has a central hole 340 which is somewhat smaller than, and is axially aligned with the holes 336. The diskette 330 is of the general type disclosed in U.S. Patent Specification No. 3,668,658 (Flores et al), and this specification may be referred to for further details.

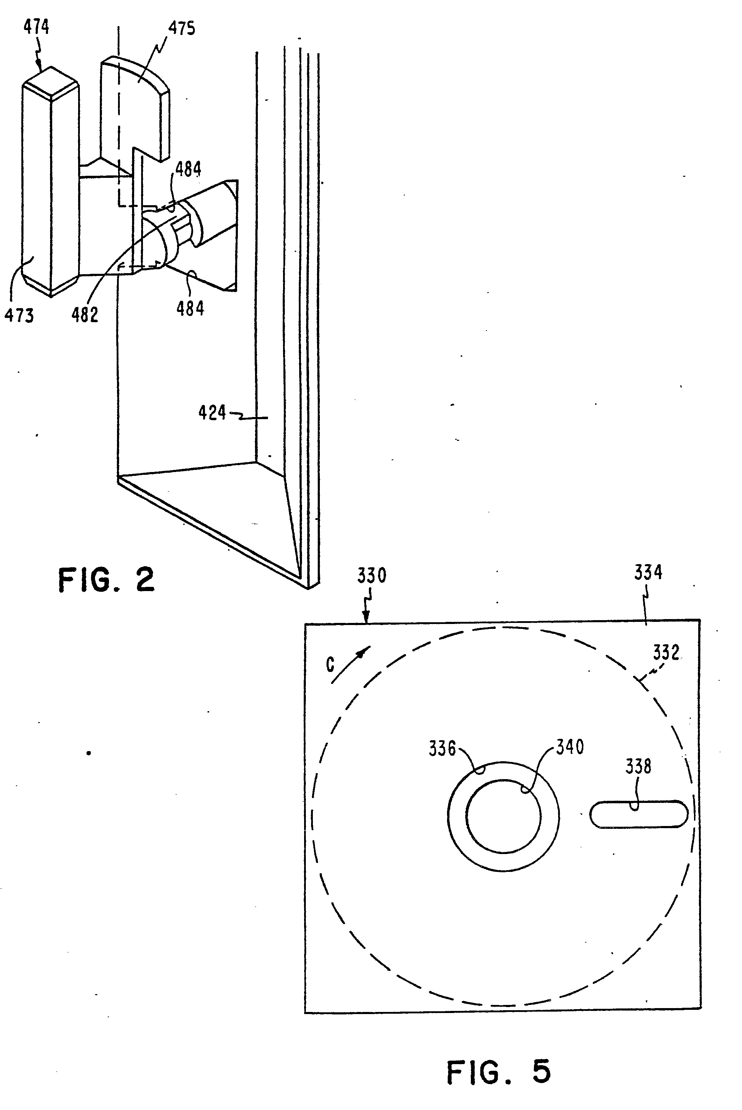

The disk drive machine includes a main frame 420 and an auxiliary frame 422 screwed to the frame 420 and thus together forming a machine frame. The frame 422 at one end has a mouth leading to a slot 424 (Fig. 2) adapted to constitute an entrance to between frames 420 and 422 for a magnetic diskette 330. The diskette is moved in direction A into the machine, and the frame 420 has a pair of stops 428 extending across the space between the frames to limit the movement of the diskette in direction A.

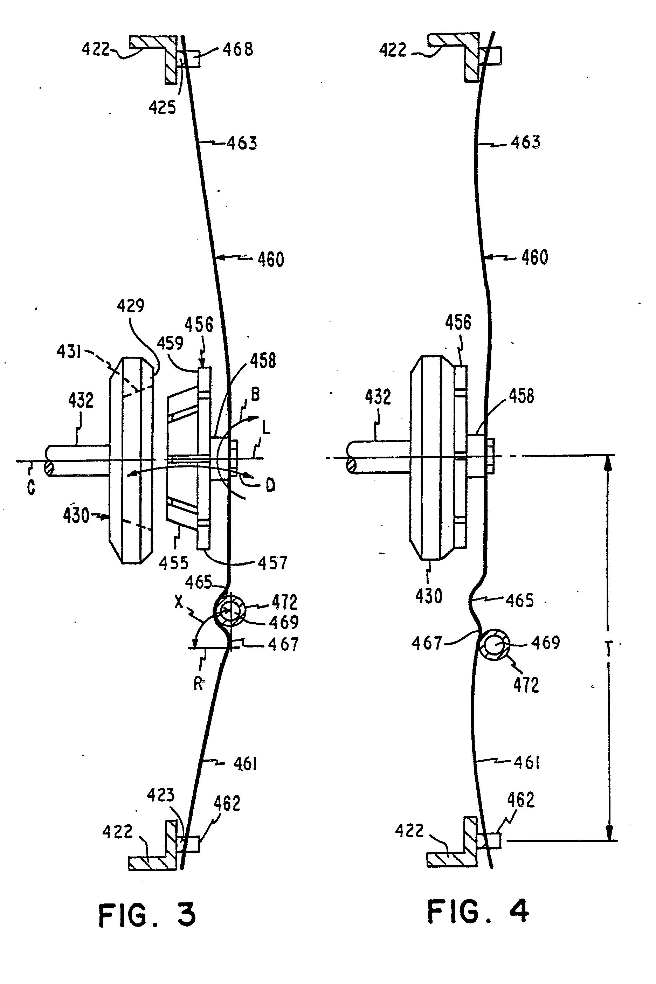

A machine or drive hub 430 is fixed on a shaft 432 (Figs. 3 and 4) rotatably disposed in and carried by the frame 420. The hub 430 has a face portion 429 disposed in a plane that is perpendicular to the longitudinal centre line C of the shaft 432 and has a central cavity 431. The shaft 432 and hub 430 are driven by a belt drive connection (not shown) from an electric motor 436 fixed to the frame 420.

A magnetic transducer carriage 70 is reciprocably mounted on a pair of guide rods 444 and 446 fixed on the frame 420. The carriage 70 may be similar to the carriage 70 disclosed in U.S. Patent Specification No. 4,089,029 (Castrodale et al) which includes magnetic heads adapted to extend through and to travel along the slots 338 in the jacket 334 of a magnetic diskette 330 in the machine. An electrical stopping motor 454 is connected to the carriage so as to cause the carriage to move along the rods 444 and 446 to thereby cause the transducers to rest in different positions on the magnetic disk 332 of the diskette 330.

A collet 456 (Fig. 3) is rotatably carried on a shaft 458 fixed to the middle of a leaf spring 460. The collet 456 has a forward tapered portion 455 and a flange 457 with a face 459 facing the hub face 429. The flange face 459 is at right angles to the longitudinal centre line L of the collet 456 and shaft 458.

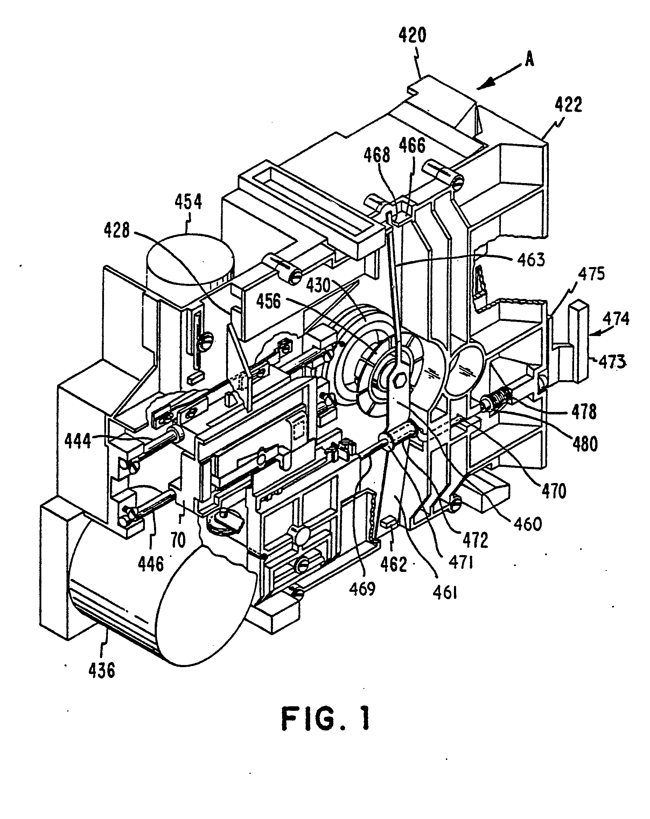

A boss 462 formed on the frame 422 extends through the leaf spring 460 adjacent the bottom end of the spring 460 which rests upon rounded bosses 423 on either side of boss 462, thus providing a pivotal connection of the spring 460 with the frame 422. The spring 460 is formed with a relatively wide lower portion 461 and with a relatively narrow upper portion 462 that join at the middle of the spring 460 just above the shaft 458. Due to the differences in width of the portions 461 and 463, the lower portion 461 is relatively stiff in comparison with the upper portion 463b. The frame 422 has a web 466 (Fig. 1) with a slot 468 therein. The upper end of the relatively narrow upper portion 463 of the leaf spring 460 extends through the slot 468 and against a boss 425 (Fig. 3) formed at the base of the slot to provide a sliding connection for the portion 463 with the frame 422 on the boss 425 and between the sides of the slot 468.

A shaft 470 is rotatably mounted in the auxiliary frame 422 and at its outer end carries a knob 474. The knob 474 (Fig. 2) has a manually operable handle portion 473 by which the knob and shaft may be turned through a right angle and a wing portion 475 which, in one position shown in Fig. 2, permits access to the slot 424, and, in the other position at right angles to the one position, blocks access to the slot 424. The knob 474 also includes a two-faced stop portion 482 which strikes one or other of two stop surfaces 484 on the auxiliary frame to limit the angular movement of the knob 474 and shaft 470 to 90°. A spring 478 bears against a washer 480 on the shaft 470 to hold the knob 474 against the frame 422.

In the vicinity of the leaf spring 460, the shaft 470 (Fig. 1) has an eccentric offset portion 469, and a roller 472 is rotatably disposed on the offset shaft portion 469. The roller 472 has end flanges 471 on opposite sides of the spring leg portion 461 to ensure its full engagement with the spring. The leg portion 461 below the shaft 458 (Fig. 3) has a depressed portion 465 into which the roller 472 fits when the knib 474 is upright and the slot 424 unobstructed by the wing portion 475.

In this condition, the spring 460 is bowed outwardly in the middle so that the collet 456 is spaced from the hub 430.

Below the depressed portion 465, the spring leg portion 461 is formed with a rounded projections 467 on which the roller 471 rides when the knob 474 and shaft 470 are turned through a right angle. In this condition, the bowing of the spring 460 (Fig. 4) is reduced and the collet 456 is urged into the hub 430.

The spring 460 in a free condition has a greater bow in it than shown in Fig. 3 and in assembled condition has its bow reduced by the roller 472 bearing on the spring. The spring 460 is thus held firmly in place at its ends with respect to the auxiliary frame 422. In the collet engaged condition of the spring 460 (Fig. 4), the spring is slightly reversely bowed due to the force exerted on it by the roller 472, and this force also holds the spring firmly in place at its ends on the auxiliary frame 422. In the collet disengaged condition (Fig. 3), the roller 472 rests in the depression 465, and the force exerted by the spring on the roller 472 thus yieldably holds the shaft 470 and knob 474 in the collet disengaged position (Figs. 1, 2 and 3).

In operation, a magnetic diskette 330 is moved in direction A into and through the slot 424 and thereby into the disk drive machine until the diskette bottoms against the stops 428. The knob 474 at this time must be in its initial position (Fig. 2) with the wing portion 475 extending upwardly so as not to prevent entrance of the diskette 330 into the slot 424. In this position of the knob 474, the spring 460 and the collet 456 are in collet disengaged positions (Fig. 3) with a substantial separation between the collet 456 and hub 430, so that the diskette 330 can move between the hub and collet into contact with the stops 428.

The knob 474 is then rotated through 90 degrees so that the wing portion 475 of the knob 474 extends across the slot 424. The shaft 470 rotates with the knob 474 and moves the offset shaft portion 469 so that the roller 472 rolls across the outer surface of the leaf spring leg portion 461, the flanges 471 keeping the roller 472 centred on the leaf spring 460. The roller 472 rolls out of the depression 465 (Fig. 3) and on to the projection 467, the centre of the shaft portion 469 moving downwardly on an arc X about a radius R. This straightens the spring 460 and slightly reverses the bow to move the collet 456 towards the hub 430. This spring straightening action is due to two different actions: (1) The movement of the centre of roller 472 and eccentric shaft portion 469 from right to left as seen in Fig. 3; and (2) the movement of roller 472 out of depression 465 and on to projection 467. As the knob 474, the shaft 470 and the roller 472 complete their movement, the roller 472 passes across the projection 467, which then acts as an overcentre detent with respect to the roller 472, holding the roller 472, the shaft 470 and the knob 474 in their new positions rotated through 90 degrees. During the movement of these parts, the collet 456 has made a complete movement towards the hub 430, and its tapered end portion 455 has passed through central hole 340 of the disk 332 and entered the cavity 431 of the machine hub. The disk 322 is held between the face portion 459 and the face portion 429 and the spring 460, due to its resilience, clamps the disk 332 between the collet 456 and the hub 430. The spring 460 bears on the frame 422 at the opposite ends of the spring at this time, and the roller 472 forcefully bears on the spring close to collet 456 to provide the clamping force of the collet 456 on the hub 430. The hub 430 is driven by the motor 436 while the disk is so clamped between the collet 456 and hub 430 to drive the disk 332.

The boss 462 constitutes a pivotal connection of the spring 460 with the frame 422, and the shaft 458 thus moves in an arc D during the movement of the collet 456 toward the machine hub 430. The spring 460 so functions that the face portions 459 and 429 are nearly parallel at the time that the collet 456 moves into engagement with the hub 430, and the centre lines C and L of hub 430 and collet 456 remain nearly in coincidence, particularly just as the collet 456 clamps the disk 332 on to the hub 430. Thus, the collet 456 when clamping the disk 332 between it and the hub 430 exerts no substantial force on the disk at right angles to the centre lines C and L so that the disk is not then thrust sidewardly and is gripped with uniform pressure on the faces 455 and 429 and on the inner margin of the disk 332 around the central hole 340.

The wide and narrow spring leg portions 461 and 463 in particular cause the collet surface 459 to remain in near parallelism with the hub surface 429 for most of the engaging motion of the collet 456 with respect to the hub 430 due to the fact that the relatively weak thin leg portion 461 of the spring 461 provides a rotational moment B which increases the closer that the collet 456 approaches the hub 430, thus bending the relatively strong wide spring leg portion 461 between the place at which the roller 472 is effective on the leg portion 461 and the centre line L with an increasing amount as the collet 456 approaches the hub 430. The leg portions 461 and 463 are particularly so effective when the collet flange 457 is about to contact the flexible disk 332 against the hub 430. The boss 462 functioning as a pivotal connection of the spring 460 causes the boss 462 and the centre lines C and L to be and remain in the same vertical plane throughout the movement of the collet 456 towards the hub 430.

Due to the effect of the relatively narrow leg portion 463 effective to slightly bend the leg portion 461, the centre lines C and L also remain in nearly the same horizontal plane as the collet 456 moves towards an engaging position with respect to the hub 430. As is apparent, the relatively narrow leaf spring portion 463 slides in the slot 468 in the web 466 as the collet 456 moves towards the hub 430, and the leaf spring 460 is supported at both its ends and acts as a bowed beam, the bowing of which is reduced and reversed by the roller 472 acting intermediate the ends of the spring 460.

Because the leaf spring 460 tends to move through an arc of motion D at the shaft 458 about the boss 462, distance T between a horizontal extension of the centre line L and a horizontal line through the boss 462 would be expected to vary depending upon the angular position of the leaf spring 460 about the boss 462. This distance T also would be expected to vary as the leaf spring curved shape changes, the curved shape flattening under the influence of the force exerted by the narrow leg portion 463 supported in the slot 468. These two changes in distance T substantially counteract each other, so that the collet 456 moves toward boss 462 with the distance T remaining nearly constant and thus with the centre lines C and L remaining substantially coincident.

With the disk 332 of the diskette 330 clamped between the collet 456 and hub 430, the transducers of carriage 70 are used for data transfer with respect to the disk 332. When this is completed, the diskette 330 may be released with respect to the hub 430 and collet 456 by rotating the knob 474 back into its original position (Fig. 2). The shaft 470 rotates correspondingly, and the roller 472 rolls back across the projection 467 into the depression 465, with corresponding outward bowing action of the spring 460 taking place, so that the spring 460 moves back into its collet disengaged condition (Fig. 3), carrying the collet 456 out of engaging position with respect to the hub 430 and separating the collet 456 from the hub 430. The wing portion 475 of the knob 474 is moved out of alignment with the slot 424, and the diskette 330 may be withdrawn from the machine through the slot 424.

Advantageously, the loading appratus for the collet 456 including bowed leaf spring 460, shaft 470 and roller 472 loads the collet 456 in nearly a straight line motion with no side motion that would tend to cause the disk 332 of the diskette 330 to move sideways out of proper position with respect to the hub 430. This is particularly true for the last increment of movement of the collet 456 toward the hub 430. The loading apparatus also causes the collet flange face 459 to bear squarely and with uniform pressure on the disk 332 against the hub face 429 for the complete circumference of the face so that there is no distortion of the disk 332 about its central hole 340. The bowed leaf spring 460 advantageouly provides a means for supporting the collet 456 which is thin in the direction of the centre lines C and L and which thus allows a relatively thin disk drive machine.

**Claims**

1. Magnetic disk drive apparatus comprising a rotatable drive hub (430) and a collet (456) movable towards the hub to grip a disk (332) about a central hole (340) between the collet and the hub, the collet being carried by a leaf spring (460) through which force is applicable to move the collet towards the hub to engage a disk between the collet and hub, characterised in that the leaf spring carries the collet between its ends and has a pivotal mounting (423, 462) at one end and a sliding connection mounting (425, 468) at the other end, force applying means includes a member (470) rotatable about an axis normal to the axis of rotation of the hub and having an eccentrically located part (469, 472) for engagement with the spring between the collet and the pivotal mounting, and the spring has a depressed portion (465) in which the eccentric part rests when the collet is in an initial disengaged position and has a projection (467) adjacent the depressed portion, over which projection the eccentric part travels during rotation of the rotatable member (470) to move the collet towards the hub and to act as a detent with respect to the spring in the collet engaged position.

2. Apparatus according to claim 1, in which the portion (461) of the spring between the pivotal mounting and the collet carrying place is stiffer than the other portion (463).

3. Apparatus according to claim 1 or 2, in which the leaf spring is bowed in a direction away from the drive hub in the collet disengaged position and the eccentrically located part holds the spring with a bow less than the bow of the spring in a free condition against the pivotal and sliding mountings.

**Revendications**

1. Appareil de commande pour disque magnétique comprenant un moyen d'entraînement rotatif (430) et un mandrin (456) mobile vers le moyeu pour saisir un disque (332) par un trou central (340) entre le mandrin et le moyeu, le mandrin étant porté par une lame flexible (460) par l'intermédiaire de laquelle une force peut être appliquée pour entraîner le mandrin vers le moyeu afin de retenir un disque entre le mandrin et le moyeu, caractérisé en ce que la lame flexible porte le mandrin entre ses extrémités et présente un élément de montage à pivot (423, 462) à une extrémité et un élément de montage coulissant (425, 468) à l'autre extrémité, le moyen applicateur de force comprend un élément (470) rotatif autour d'un axe normal à l'axe de rotation du moyeu et présente un élément excentrique (469, 472) destiné à entrer en contact avec la lame flexible entre le mandrin et l'élément de montage à pivot, et en ce que le lame flexible présente un enfoncement (465) dans lequel repose l'élément excentrique lorsque le mandrin est en position initiale dégagée, et une partie saillante (467) adjacente à l'enfoncement, sur laquelle se déplace l'élément excentrique pendant la rotation de l'élément rotatif (470) pour entraîner le mandrin vers le moyeu et pour faire fonction de butée pour la lame flexible lorsque le mandrin est en position engagée.

2. Appareil selon la revendication 1 dans lequel la partie (461) de la lame flexible entre l'élément de montage à pivot et la partie portant le mandrin, est plus rigide que la partie opposée (462).

3. Appareil selon la revendication 1 ou 2 dans lequel la lame flexible est arquée dans un sens l'éloignant du moyeu d'entraînement lorsque le mandrin est en position dégagée et dans lequel l'élément excentrique maintient la lame flexible dans une position où elle fait un arc moindre que lorsque ladite lame flexible repose librement contre les éléments de montage à pivot et coulissant.

**Patentansprüche**

1. Magnetplatten-Antriebvorrichtung mit einer drehbaren Antriebsnabe (430) und einer Klemmhülse (456), die auf die Nabe hin zu bewegbar ist, um eine Platte (332) um ein Mittelloch (340) herum zwischen sich und der Nabe einzuklemmen, wobei die Klemmhülse von einer Blattfeder (460) getragen wird, über die Kraft zuführbar ist, um die Klemmhülse auf die Nabe hinzuzubewegen, um die Platte zwischen Klemmhülse und Nabe zu ergriefen, dadurch gekennzeichnet, daß die Blattfeder die Nabe zwischen ihrer Enden trägt und an einem Ende eine Drehbefestigung (423, 462) und am anderen Ende eine Gleitbefestigung (425, 468) aufweist, die Kraftzuführvorrichtung ein Teil (470) aufweist, welches um eine Achse drehbar ist, die senkrecht zur Rotationsachse der Nabe steht und einen exzentrisch angeordneten Teil (469, 472) aufweist für die Verbindung mit der Feder zwischen der Klemmhülse und der Drehbefestigung, und daß die Feder einen vertieften Teil (465) aufweist, in dem das exzentrische Teil ruht, wenn die Klemmhülse in ihrer anfänglichen nicht eingreifenden Lage ist, und einen Vorsprung (467) neben dem vertieften Teil aufweist, über den der exzentrische Teil während der Drehung des drehbaren Teils (470) hinweggleitet, um die Klemmhülse auf die Nabe hinzuzubewegen und um als Arretierung der Feder in der Eingriffstellung der Klemmhülse zu dienen.

2. Vorrichtung gemäß Anspruch 2, bei der der Teil (461) der Feder, der zwischen der Drehbefestigung und dem die Klemmhülse tragenden Teil liegt, steifer als der andere Teil (463) ist.

3. Vorrichtung nach Anspruch 1 oder 2, bei der die Blattfeder in einer Richtung von der Antriebsnabe weg in Richtung auf die nicht eingreifende Stellung der Klemmhülse gebogen ist, und daß der exzentrisch angeordnete Teil die Feder in einer geringeren Biegung gegen die Dreh- und Gleit-Befestigungen hält, als es der Biegung der Feder in einer freien Lage entspricht.

FIG. 1

FIG. 2

FIG. 5

0 010 605

FIG. 3

FIG. 4